# EUROPÄISCHE PATENTANMELDUNG

(11) **EP 1 359 177 A1**
(43) Veröffentlichungstag der Anmeldung: **05.11.2003**
(21) Anmeldenummer: 03008668.0
(22) Anmeldetag: 16.04.2003
(51) Int. Cl.: C08G 64/30

(54) **Herstellung und Verwendung von hochmolekularen aliphatischen Polycarbonaten**

(30) Priorität: 29.04.2002 DE 10219028
(71) Anmelder: Bayer Aktiengesellschaft, 51368 Leverkusen (DE)
(72) Erfinder: Moethrath, Melanie, Dr., 40227 Düsseldorf (DE); Bunzel, Lothar, 47906 Kempen (DE); Deml, Hans, 47800 Krefeld (DE); Ebert, Wolfgang, Dr., 47800 Krefeld (DE)

(57) **Zusammenfassung**

Die Anmeldung betrifft ein Verfahren zur Herstellung von hochmolekularen aliphatischen Polycarbonaten sowie die erhältlichen Polycarbonate selbst und die Verwendung dieser Polycarbonate zur Herstellung von Extrudaten, Folien und Formkörpern und diese Extrudate, Folien und Formkörper selbst.

## Beschreibung

Die Anmeldung betrifft ein Verfahren zur Herstellung von hochmolekularen aliphatischen Polycarbonaten sowie die auf diesem Wege erhältlichen Polycarbonate selbst und die Verwendung dieser Polycarbonate zur Herstellung von Extrudaten, Folien und Formkörpern und diese Extrudate, Folien und Formkörper selbst.

Die Herstellung von niedermolekularen diolterminierten aliphatischen Polycarbonaten im industriellen Maßstab ist als Einsatzstoffe für Polyurethane grundsätzlich bekannt.

So wird die Herstellung von niedermolekularen diolterminierten aliphatischen Polycarbonaten in homogener Phase aus Chlorkohlensäureestem und aliphatischen Diolen beispielsweise in DE 2 447 349 A beschrieben. Die Herstellung solcher Polycarbonate im Phasengrenzflächenverfahren aus Chlorkohlensäureestern und aliphatischen Diolen wird beispielsweise in DE 2 446 107 A beschrieben. Darüber hinaus beschreiben beispielsweise DE 2 523 352 A, DE 2 546 534 A und DE 10 027 907 A1 die Herstellung solcher Polycarbonate im Umesterungsverfahren aus Kohlensäureestern und aliphatischen Diolen.

All diese Verfahren haben gemeinsam, dass als maximale gewichtsgemittelte Molekulargewichte Mw der Polymere 15 000 bis 20 000 g mol⁻¹ beschrieben werden. Bevorzugte Molekulargewichte bei der industriellen Fertigung als Einsatzstoffe für Polyurethane liegen zwischen 350 und 3000 g mol⁻¹.

Eine weitere Umsetzung der so erhältlichen niedermolekularen Polycarbonat-Polymere zu hochmolekularen rein aliphatischen Polycarbonaten ist bislang nicht bekannt, obwohl es auf Grund der erheblich günstigeren Kostenstruktur durch billigere Monomere sehr interessant wäre, aromatische hochmolekulare Polycarbonate durch entsprechende aliphatischen Werkstoffe zu ersetzen.

Hochmolekulare Polycarbonate mit aliphatischen Polycarbonatblöcken sind bis heute lediglich in wenigen Spezialfällen beschrieben. So wird in EP 000 060 A1 die Herstellung von hochmolekularen Polyether-Co-Polycarbonaten dargelegt. Dabei werden niedermolekulare Polyalkylenoxiddiole in über Carbonat-Gruppen verlängerte Bischlorkohlensäuremonoarylester überführt. Diese werden weiter mit Bisphenolen zu über Carbonat-Gruppen verlängerten Polyalkylenoxiddiol-bis-diphenol-carbonaten umgesetzt, welche dann im Phasengrenzflächenverfahren mit Phosgen und Bisphenolen zu Polyether-Polycarbonaten aufkondensiert werden. Durch dieses aufwendige dreistufige Verfahren gelangt man zu Polymeren mit maximalen mittleren Molekulargewichten von 250 000 g mol⁻¹. Als nachteilig erweist sich die Beschränkung der aliphatischen Eingangsverbindungen auf Polyalkylenoxiddiole. Des weiteren ist die Herstellung von hochmolekularen rein aliphatischen Polycarbonaten auf diesem Weg nicht möglich.

In US 3 161 615 wird die Herstellung von hochmolekularen 1,6-Hexandiol-Co-Polycarbonaten dargelegt. In einem ersten Schritt wird zunächst durch die Reaktion von 1,6-Hexandiol mit Phosgen in Pyridin ein niedermolekulares 1,6-Hexandiol-Polycarbonat gebildet, welches dann weiter mit Bisphenol A und Phosgen umgesetzt wird. Auch auf diesem Weg ist die Herstellung von hochmolekularen rein aliphatischen Polycarbonaten nicht möglich.

In beiden Fällen erweist weiterhin sich als nachteilig, dass der Einsatz von Phosgen für eine technische Umsetzung im Hinblick auf erhebliche Sicherheitsrisiken und hohe, durch Korrosion bedingte Materialkosten als schwierig und aufwendig anzusehen ist.

In DE 1 031 512 wird die Herstellung von hochmolekularen aliphatischen Polycarbonaten beschrieben. Damit die Umsetzung von beispielsweise 1,6-Hexandiol und Diethylcarbonat unter Alkalikatalyse zu hochmolekularen aliphatischen Polycarbonaten gelingt, muss der Reaktion im Oligomerenbereich eine basenbindende Substanz wie beispielsweise Chlorameisensäurephenylester zugesetzt werden. Als nachteilig erweist sich, dass nach der Neutralisation des Katalysators die Umesterung nur im begrenzten Maße weitergeführt werden kann. Aus eigenen Experimenten ist bekannt, dass das erreichbare Molekulargewicht auf ungefähr 28000 g mol⁻¹ begrenzt ist. Interessante zähelastische Eigenschaften weisen die Polymere allerdings erst oberhalb dieses Molekulargewichts auf. Des weiteren wird eine Herstellung von gemischten aliphatischen Polycarbonaten nach diesem Verfahren nicht beschrieben.

In EP 0 236 862 A2 wird die Herstellung hochmolekularer linearer aliphatischer Polycarbonate aus cyclischen aliphatischen Carbonaten beschrieben. In einer ringöffnenden Lösungspolymerisation werden cyclische aliphatische Carbonate in Gegenwart von aprotischen organischen Lösungsmitteln mit metallorganischen Katalysatoren, wie beispielsweise Butyl-Lithium, zu Polycarbonaten polymerisiert. Dadurch können Polymere mit Molekulargewichten bis 120 000 g mol⁻¹ erhalten werden. Als nachteilig für Ansätze im größeren Maßstab erweist sich, dass bei diesem Verfahren unter absolutem Ausschluss von Luftsauerstoff und Feuchtigkeit und bei Temperaturen von - 50°C bis 0°C bei einer exothermen Polymerisation gearbeitet werden muss. Die Palette der kommerziell verfügbaren cyclischen aliphatischen Carbonate ist jedoch auf wenige spezielle Verbindungen wie beispielsweise Ethylencarbonat, Propylencarbonat und Neopentylglykolcarbonat limitiert. Eine Herstellung von gemischten aliphatischen Polycarbonaten ist nach diesem Verfahren nicht möglich.

Ausgehend vom Stand der Technik stellt sich somit die Aufgabe, ein unkompliziertes Verfahren zur Herstellung von hochmolekularen aliphatischen Polycarbonaten mit aliphatischen Polycarbonatblöcken bereitzustellen, welches für eine Vielzahl verschiedener aliphatischer Diole als Eingangsstoffe geeignet ist und gleichzeitig die Möglichkeit bietet, gemischte, hochmolekulare aliphatische Polycarbonate herzustellen.

Diese Aufgabe wurde überraschenderweise durch das erfindungsgemäße zweistufige Herstellungsverfahren gelöst.

Gegenstand der vorliegenden Anmeldung ist ein Verfahren zur Herstellung von aliphatischen Polycarbonaten mit aliphatischen Polycarbonatblöcken, dadurch gekennzeichnet, dass in einer ersten Stufe nach verschiedenen Verfahrensvarianten die Herstellung von niedermolekularen aliphatischen Polycarbonaten erfolgt, welche anschließend in einer zweiten Stufe nach dem Schmelzeumesterungsverfahren zu hochmolekularen aliphatischen Polycarbonaten aufkondensiert werden.

Als niedermolekulare aliphatische Polycarbonate werden oben und im Folgendenden solche mit einem mittleren, gewichtsgemittelten Molekulargewicht von 300 bis 20 000 g mol⁻¹ bezeichnet. Als hochmolekulare aliphatische Polycarbonate werden oben und im Folgenden solche mit einem mittleren Molekulargewicht von über 20 000 bis zu 500 000 g mol⁻¹ bezeichnet.

Im Kontext der vorliegenden Anmeldung ist unter dem Molekulargewicht oder mittleren Molekulargewicht von Oligo- oder Polymeren immer des gewichtsgemittelte Molekulargewicht zu verstehen, es sei denn es wäre ausdrücklich anders angegeben.

Als aliphatische Polycarbonate werden oben und im Folgendenden solche mit aliphatischen Gruppen an den Carbonat-Sauerstoffatomen-Bindungen bezeichnet. Diese aliphatischen Gruppen können aber durchaus über aromatische Gruppen/Reste verknüpft sein, solange keine aromatischen Gruppen direkt an den Carbonat-Sauerstoffatomen-Bindungen gebunden sind.

Als Verfahren zur Herstellung der niedermolekularen aliphatischen Polycarbonate in der ersten Stufe des erfindungsgemäßen Verfahrens kommen prinzipiell alle im Stand der Technik bekannten Verfahren zur Herstellung von Polycarbonatdiolen in Frage. Solche Verfahren sind zum Beispiel in den Anmeldungen DE 1 915 908 A, DE 2 447 349 A, DE 2 446 107 A, , DE 10 027 907 A1, EP 1 018 504 A, WO 95 22 749 A, EP 292 772 Bl und EP 1 134 248 A beschrieben. Bevorzugt sind solche Verfahren, bei denen die Herstellung der aliphatischen Polycarbonate ohne Phosgen erfolgt. Das sind insbesondere Umesterungsverfahren mit Kohlensäurediestern wie in DE 1 915 908 A, DE 10 027 907 A1, DE 2 546 534 A, DE 2 523 352 A und EP 1 018 504 A beschrieben.

Gemäß dem erfindungsgemäßen Verfahren werden in einer zweiten Stufe die niedermolekularen aliphatischen Polycarbonate in einer Inertgasatmosphäre mit Diarylcarbonat und gegebenenfalls aliphatischen Diolen gemischt und unter Anwesenheit eines Katalysators unter Verringerung des Drucks bis zu Temperaturen von 150 bis 320°C, bevorzugt 160 bis 280°C und besonders bevorzugt zwischen 180°C und 220°C aufkondensiert und dabei die entstehende Hydroxyarylkomponente abdestilliert. Zu jedem Zeitpunkt wird der Druck so gewählt, dass die Hydroxyarylkomponente problemlos abdestilliert werden kann. Dieser Druck kann von 1000 mbar bis zum Hochvakuumbereich variieren, abhängig von der abzudestillierenden Komponente.

Gegenstand der Erfindung sind ebenfalls die auf diese Weise erhältlichen hochmolekularen aliphatischen Polycarbonate selbst, die sich durch ein gutes Eigenschaftsbild, nämlich eine gutes zähelastisches Verhalten bei einem gewichtsgemittelten Molgewicht Mw von mindestens 30 000 g mol⁻¹, bevorzugt 35 000 g mol¹⁻ auszeichnen, und die Verwendung dieser Polycarbonate zur Herstellung von Extrudaten, Folien und Formkörpern und diese Extrudate, Folien und Formkörper selbst.

Die oben oder nachfolgend aufgeführten allgemeinen oder in Vorzugsbereichen aufgeführten Restedefinitionen, Parameter bzw. Erläuterungen können auch untereinander, also zwischen den jeweiligen Bereichen und Vorzugsbereichen beliebig kombiniert werden. Sie gelten für die Endprodukte sowie für die Vor- und Zwischenprodukte und für Verfahren sowie Verfahrensschritte entsprechend.

Für die erste Stufe des erfindungsgemäßen Verfahrens geeignete aliphatische Diole sind solche der Formel (I)

H[O-T-]ₙOH (I)

wobei
n eine Zahl zwischen 1 und 100, bevorzugt 1 bis 80 und besonders bevorzugt 1 bis 45 und
T einen verzweigten oder linearen, gesättigten oder ungesättigten Alkyl-, Cycloalkylteil aus 3 - 20 Kohlenstoffen darstellt. Bevorzugt sind gesättigte, lineare Alkyldiole mit 3 - 15 Kohlenstoffen, besonders bevorzugt mit 3 - 10 Kohlenstoffen, ganz besonders bevorzugt mit 6-10 Kohlenstoffatomen und insbesondere auch 7-10 Kohlenstoffatomen.

Exemplarisch, aber nicht ausschließlich genannt seien 1,7-Heptandiol, 1,8-Octandiol, 1,6-Hexandiol, 1,5-Pentandiol, 1,4-Butandiol, 1,3-Propandiol, 2-Methyl-1,3-propandiol, 3-Methyl-1,5-pentandiol, 2-Methylpentandiol, 2,2,4-Trimethyl-1,6-hexandiol, 2-Ethyl-1,6-hexandiol, 2,3,5-Trimethyl-1,6-hexandiol, Cyclohexan-dimethanol, Neopentylglykol, etc. und Polyethylenglykol, Polypropylenglykol, Polybutylenglykol sowie Polyetherpolyole die durch Copolymerisation von z.B. Ethylenoxid und Propylenoxid erhalten wurden oder Polytetramethylenglykol, das durch ringöffnende Polymerisation von Tetrahydrofuran (THF) erhalten wurde, Di-, Tri-, und Tetrahexyletherglykol sowie Mischungen verschiedener Diole.

Weiterhin können Additionsprodukte der in Formel (I) beschriebenen Diole mit Lactonen (Esterdiole) wie z.B. Caprolacton, Valerolacton etc. eingesetzt werden, sowie Mischungen der Diole mit Lactonen, wobei eine einleitende Umesterung von Lactonen und Diolen nicht nötig ist.

Eingesetzt werden können auch die Additionsprodukte der in Formel (I) beschriebenen Diole mit Dicarbonsäuren wie z.B.: Adipinsäure, Glutarsäure, Bernsteinsäure, Malonsäure etc. oder Ester der Dicarbonsäuren sowie Mischungen der Diole mit Dicarbonsäuren bzw., Ester der Dicarbonsäuren, wobei eine einleitende Umesterung von Dicarbonsäure und den Diolen nicht nötig ist.

Es können auch Mischungen verschiedener Diole, Lactone und Dicarbonsäuren eingesetzt werden.

Bevorzugt werden in dem erfindungsgemäßen Verfahren 1,6-Hexandiol, 1,5-Pentandiol und Mischungen aus 1,6-Hexandiol und Caprolacton eingesetzt.

Besonders bevorzugt wird 1,6-Hexandiol eingesetzt.

Als geeignete Carbonatkomponenten für die erste Stufe des erfindungsgemäßen Verfahrens sind Diarylcarbonate, Dialkylcarbonate, Alkylencarbonate, Dioxolanone, Alkyldiolbischlorkohlensäureester, Phosgen oder Harnstoff geeignet.

Bevorzugt sind Diaryl- und Dialkylcarbonate.

Besonders bevorzugt sind Diphenylcarbonat und Dimethylcarbonat.

Als Katalysatoren können prinzipiell alle für Umesterungsreaktionen bekannte, lösliche Katalysatoren (homogene Katalyse), sowie heterogene Umesterungskatalysatoren eingesetzt werden. Vorzugsweise wird der erste Schritt des erfindungsgemäßen Verfahrens in Gegenwart von Katalysatoren durchgeführt.

Insbesondere eignen sich für das erfindungsgemäße Verfahren Hydroxide, Oxide, Metallalkoholate, Carbonate und metallorganische Verbindungen der Metalle der I., II., III. und IV. Hauptgruppe des Periodensystems der Elemente, der III. und IV.

Nebengruppe sowie die Elemente aus der Gruppe der Seltenen Erden, insbesondere die Verbindungen des Ti, Zr, Pb, Sn und Sb.

Zum Beispiel seien genannt: LiOH, Li₂CO₃, K₂CO₃, KOH, NaOH, KOMe, NaOMe, MgOH, MgCO₃, MeOMgOAc, CaO, BaO, KOt-Bu, TiCl₄, Titan-tetraalkoholate oder -terephthalate, Titantetraalkyle, Zirconiumtetraalkoholate, Zinnoctanoate, Dibutylzinndilaureat, Dibutylzinnoxid, Dibutylzinnmethoxid, Bistributylzinnoxid, Dibutylzinnlaureat, Zinnoxalate, Bleistearate, Antimontrioxid, Zirconium-tetra-isopropylat, Zinn etc. Weiterhin können anorganische oder organische Säuren wie z.B. Phosphorsäure, Essigsäure, p-Toluolsulfonsäure als Katalysatoren eingesetzt werden.

Weiterhin können im erfindungsgemäßen ersten Schritt des Verfahrens tertiäre Amine mit R₁R₂R₃N mit R₁₋₃ als C₁-C₃₀-Hydroxyalkyl, -aryl oder -alkyl eingesetzt werden, besonders Trimethylamin, Triethylamin, Tributylamin, N,N-Dimethylcyclohexylamin, N,N-Dimethylethanolamin, 1,8-Diazabicyclo-(5.4.0)undec-7-en, 1,4-Diazabicyclo(2.2.2)octan, 1,2-Bis(N,N-dimethylamino)-ethan, 1,3-Bis(N,N-dimethylamino)-propan und Pyridin.

Bevorzugt werden die Alkoholate, Carbonate und Hydroxide des Natriums, des Kaliums und des Magnesiums (NaOH, KOH, KOMe, NaOMe, MgOH, MgCO₃), die Alkoholate, die Alkylate und die Carbonate des Titans, Zinns oder Zirkoniums (z.B. Ti(OPr)₄), sowie Zinn-organische Verbindungen (z.B. Bistributylzinnoxid) eingesetzt, wobei die Titan-, Zinn- und Zirkoniumtetraalkoholate bevorzugt bei Diolen, welche Esterfunktionen bzw. Mischungen von Diolen mit Lactonen enthalten, eingesetzt werden.

Die Katalysatoren werden bevorzugt in Mengen von 0,00001 bis 2,0 Gew.-%, bevorzugt von 0,00005 bis 1,3 Gew.-% und besonders bevorzugt von 0,0001 bis 0,8 Gew.-% bezogen auf die eingesetzten aliphatischen Diole eingesetzt.

Der Katalysator kann nach Abschluss der Reaktion im Produkt belassen, abgetrennt, neutralisiert oder maskiert werden. Vorzugsweise wird der Katalysator im Produkt belassen.

Die verwendeten aliphatischen Diole wie auch die übrigen verwendeten Rohstoffe, zugesetzten Chemikalien und Hilfsstoffe sollten selbstverständlich so rein wie möglich sein.

Der erste Schritt des erfindungsgemäßen Verfahrens kann kontinuierlich oder batchweise ausgeführt werden.

Der erste Schritt des erfindungsgemäßen Verfahrens braucht apparatetechnisch nicht physikalisch mit dem zweiten Schritt des erfindungsgemäßen Verfahrens verbunden zu sein, solange die niedermolekularen Polycarbonate, die nach dem ersten Schritt des erfindungsgemäßen Verfahrenserhalten werden, für die Herstellung von hochmolekularen aliphatischen Polycarbonaten eingesetzt werden.

In einer alternativen Ausführungsform des erfindungsgemäßen Verfahrens werden die hochmolekularen aliphatischen Polycarbonate aus kommerziell erhältlichen niedermolekularen aliphatischen Polycarbonaten hergestellt, welche den ansonsten im ersten Verfahrensschritt hergestellten niedermolekularen aliphatischen Polycarbonaten entsprechen. Demnach betrifft die vorliegende Erfindung auch ein Verfahren zur Herstellung von hochmolekularen aliphatischen Polycarbonaten aus niedermolekularen aliphatischen Polycarbonaten durch ein Schmelzumesterungsverfahren entsprechend der zweiten Stufe des zuvor beschriebenen erfindungsgemäßen Hauptverfahrens.

Der erste Schritt des erfindungsgemäßen Verfahrens kann nach einem Schmelzeverfahren, mit und ohne Lösungsmittel, oder in Lösung, homogen oder im Phasengrenzflächenverfahren, erfolgen.

Exemplarisch aber nicht ausschließlich genannt sind wässrigere, alkalische Lösungen. Als alkalische Komponenten können alle in Wasser löslichen oder dispergierbaren Alkali- und Erdalkalihydroxide, bevorzugt jedoch Natriumhydroxid, Kaliumhydroxid, Magnesiumhydroxyd und oder Calciumhydroxid (Aufschlämmung von Calciumoxid in Wasser) oder deren Mischungen verwendet werden.

Weiterhin seien als Lösungsmittel im erfindungsgemäßen ersten Schritt des Verfahrens exemplarisch aber nicht ausschließlich genannt: aromatische Kohlenwasserstoffe wie Toluol, Xylol, Ethylbenzol, Cumol, 1,2,4-Trimethylbenzol, Mesitylen, Tetramethylbenzol, Cymol, Diethylbenzol, Diisopropylbenzol, Chlortoluol, Brombenzol oder Tetralin, Olefine wie Propylenbenzol, Allylbenzol oder α-Methylstyrol, Ether wie Diethylether, Dipropylether, Dibutylether, Diisopropylether, Diisobutylether, Diamylether, Anisol, Phenetol oder Kresolmethylether und Ketone wie Dibutylketon, Di-tert-butylketon oder Diamylketon, Decan, Dodecan, Tridecan, Dimethyloctan, Testbenzin, Halogenkohlenwasserstoffen wie Chlorbenzol, Dichlorbenzol, Methylenchlorid, Chloroform, Trichlorpropan, Tetrachlorethan, Chlornaphthalin, Ethylcyclohexan, Isopropylcyclohexan, Decalin, Styrol oder Inden.

Es können auch Mischungen verschiedener Lösungsmittel eingesetzt werden.

Bevorzugt erfolgt der erste Schritt des erfindungsgemäßen Verfahrens im Schmelzeverfahren, besonders bevorzugt lösungsmittelfrei.

Gegebenfalls kann der erste Schritt des erfindungsgemäßen Verfahrens in Gegenwart von Inertgasen durchgeführt werden. Exemplarisch aber nicht ausschließlich genannt sind Stickstoff, Helium, Wasserstoff, Methan, Ethan, Propan, Kohlenmonoxid, bevorzugt Stickstoff, Kohlendioxid.

Der erste Schritt des erfindungsgemäßen Verfahrens wird allgemein bei Temperaturen zwischen 0°C und 320°C, bevorzugt 10°C und 275°C und besonders bevorzugt zwischen 20°C und 220°C und Drücken von 1 bar bis 0,001 (Hochvakuum) bar ausgeführt.

Die Temperatur- und Druckbereiche können dabei abhängig von den verwendeten und auftretenden Stoffen und Verbindungen unter Umständen auch von den angegebenen Werten abweichen.

Gemäß dem erfindungsgemäßen Verfahren werden im ersten Schritt die Edukte in Gegenwart eines Katalysators in Inertgasatmosphäre vermischt und unter ständigem Vermischen unter Normaldruck über einen Zeitraum von 0,01 bis 7 Stunden, bevorzugt 0,05 bis 6 Stunden, besonders bevorzugt 0,5 bis 5 Stunden, auf eine Temperatur von 140°C bis 260°C, bevorzugt 155°C bis 220°C und besonders bevorzugt 170°C bis 200°C erhitzt. Dann wird bei schrittweiser Erhöhung der Temperatur bis zu 230°C, bevorzugt bis zu 220°C und besonders bevorzugt bis zu 210°C der freiwerdende Alkohol abdestilliert. Dabei wird die Temperatur so gewählt, dass der freiwerdende Alkohol stets ohne Probleme abdestilliert werden kann. Daraufhin erniedrigt man den Druck so, dass Reste der entstehende Alkoholkomponente problemlos aus dem Reaktionsansatz entfernt werden können und insgesamt die theoretisch mögliche Menge der freiwerdenden Alkoholkomponente abdestilliert wird. Nach vollständiger Reaktion wird der Ansatz auf 110 - 50°C, bevorzugt 100 - 60°C, besonders bevorzgt 90 - 70°C abgekühlt und dann erst belüftet.

Das Molekulargewicht der in der ersten Stufe nach dem erfindungsgemäßen Verfahren hergestellten niedermolekularen aliphatischen Polycarbonate wird über das Verhältnis Diol zu Carbonatkomponente eingestellt. Im allgemeinen wendet man solche Mengenverhältnisse an, dass Polycarbonate mit einem Molekulargewicht von 260 bis 20 000 g mol⁻¹, bevorzugt zwischen 300 und 7 300 g mol⁻¹, besonders bevorzugt zwischen 350 und 3 000 g mol⁻¹, entstehen.

Der erste Schritt des erfindungsgemäßen Verfahrens erlaubt die Herstellung niedermolekularer Polycarbonate der Formel II mit Kohlenstoffzahlen in der Kette zwischen 7 und 1300, bevorzugt zwischen 9 und 600, besonders bevorzugt zwischen 11 und 300, in welcher R1 dabei als Symbol für aliphatische Diole mit einer Kohlenstoffzahl in der Kette zwischen 3 und 50, bevorzugt zwischen 4 und 40, besonders bevorzugt zwischen 4 und 20 steht.

Besonders bevorzugt ist die Herstellung eines 1,6-Hexandiolcarbonats mit einer mittleren molaren Masse von 1800 bis 2200 g mol⁻¹.

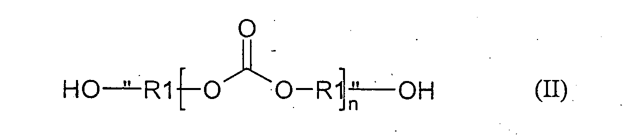

Die Diole können zusätzlich Ester, Ether, Amid und/oder Nitril-Funktionen enthalten. Bevorzugt werden Diole oder Diole mit Ester-Funktionen, wie sie z.B. durch den Einsatz von Caprolacton und 1,6-Hexandiol erhalten werden, eingesetzt und Diole mit Etherfunktionen. Werden zwei oder mehr Diol-Komponenten eingesetzt (z.B. Mischungen aus verschiedenen Diolen oder Mischungen von Diolen mit Lactonen), so können sich zwei benachbarte Gruppen R1 in einem Molekül durchaus unterscheiden (statistische Verteilung).

Für die Synthese der hochmolekularen aliphatischen Polycarbonate über den zweiten Schritt der Schmelzeumesterung können neben den nach dem ersten Verfahrensschritt herstellbaren niedermolekularen aliphatischen Polycarbonate gegebenenfalls aliphatische Diole zum Einsatz kommen.

Für den Einsatz in der zweiten Stufe des erfindungsgemäßen Verfahrens geeignete aliphatische Diole sind solche der Formel (I)

H[O-T-]ₙOH (I)

wobei
n eine Zahl zwischen 1 und 100, bevorzugt 1 bis 80 und besonders bevorzugt 1 bis 45 und
wobei T sowohl für einen verzweigten oder linearen, gesättigten, ungesättigten Alkyl- oder Cycloalkylrest aus 2 - 40 Kohlenstoffen, bevorzugt gesättigte, lineare Alkyldiole mit 3 - 15 Kohlenstoffen, besonders bevorzugt mit 3 - 10 Kohlenstoffen, ganz besonders bevorzugt mit 6-10 Kohlenstoffatomen, insbesondere 7-10 Kohlenstoffatomen steht, als auch für einen Rest (II)

Al-O-Ar-O-Al (II)

worin A1 verzweigte oder lineare, gesättigte oder ungesättigte Alkyl- oder Cycloalkylreste aus 2-40 Kohlenstoffen und -O-Ar-O- für einen von einem Bisphenol, bevorzugt Bisphenol A, Bisphenol TMC oder Bisphenol M, abgeleiteten aromatischen Rest aus 12-24 Kohlenstoffatomen steht.

Exemplarisch, aber nicht ausschließlich genannt seien 1,7-Heptandiol, 1,8-Octandiol, 1,6-Hexandiol, 1,5-Pentandiol, 1,4-Butandiol, 1,3-Propandiol, 2-Methyl-1,3-propandiol, 3-Methyl-1,5-pentandiol, 2-Methylpentandiol, 2,2,4-Ttrimethyl-1,6-hexandiol, 2,3,5-Trimethyl-1,6-Hexandiol, Cyclohexandimethahol, Neopentylglykol, Dodecandiol, Perhydro-Bisphenol-A, Spiroundecandiole, ethoxylierte oder propoxylierte Bisphenole mit aliphatischen Polyetherpolyolen unterschiedlicher Kettenlänge als Endgruppen wie beispielsweise Dianole®, Newpole® und ethoxiliertes BP-TMC, ethoxylierte oder propoxylierte Resorcine, Hydrochinone, Brenzcatechine mit aliphatischen Polyetherpolyolen unterschiedlicher Kettenlänge als Endgruppen, Polypropylenglykol, Polybutylenglykol sowie Polyetherpolyole die durch Copolymerisation von z.B. Ethylenoxid und Propylenoxid erhalten wurden, Di-, Tri-, und Tetrahexyletherglykol, etc. sowie Mischungen verschiedener Diole.

Weiterhin können Additionsprodukte der Diole mit Lactonen (Esterdipole) wie z.B. Caprolacton, Valerolacton etc. eingesetzt werden, sowie Mischungen der Diole mit Lactonen, wobei eine einleitende Umesterung von Lactonen und Diolen nicht nötig ist.

Eingesetzt werden können auch die Additionsprodukte der Diole mit Dicarbonsäuren wie z.B.: Adipinsäure, Glutarsäure, Bernsteinsäure, Malonsäure, Hydroxypivalinsäure etc. oder Ester der Dicarbonsäuren sowie Mischungen der Diole mit Dicarbonsäuren bzw., Ester der Dicarbonsäuren wobei eine einleitende Umesterung von Dicarbonsäure und den Diolen nicht nötig aber möglich ist. Exemplarisch aber nicht ausschließlich sind genannt Polyneopentylglykoladipat und Hydroxypivalinsäureneopentylglykolester.

Die aliphatischen Diole werden, bezogen auf die niedermolekularen aliphatischen Polycarbonate so eingesetzt, dass die Summe der zugesetzten aliphatischen Diole und der niedermolekularen aliphatischen Polycarbonate in der resultierenden Reaktionsmischung 100 mol% beträgt. Es können also 0 bis 99,9 mol %, bevorzugt 20 bis 90 mol% und besonders bevorzugt 28 bis 85 mol% aliphatische Diole bezogen auf die Summe der zugesetzten aliphatischen Diole und der niedermolekularen aliphatischen Polycarbonate eingesetzt werden.

Es können auch Mischungen verschiedener Diole, Lactone und Dicarbonsäuren und deren Additionsprodukte eingesetzt werden. Dabei kann das zugegebene aliphatische Diol oder die Mischungen verschiedener Diole, Lactone und Dicarbonsäuren identisch oder verschieden von dem im ersten Schritt verwendeten aliphatischen Diol und den verwendeten Mischungen verschiedener Diole, Lactone und Dicarbonsäuren sein.

Für die Synthese der hochmolekularen aliphatischen Polycarbonate über die Schmelzeumesterung im zweiten Schritt des erfindungsgemäßen Verfahrens kommen unabdingbar Diarylcarbonate zu Einsatz. Diarylcarbonate im Sinne vorliegender Erfindung sind solche Kohlensäurediester der Formel (III) 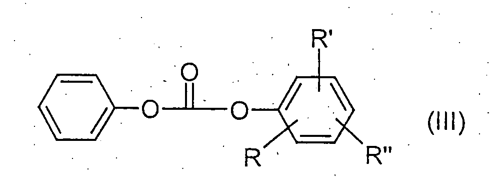 und Formel (IV), 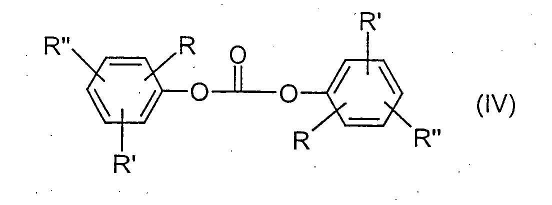 wobei R, R' und R" unabhängig voneinander H, gegebenenfalls verzweigte C₁-C₃₄-Alkyl/Cycloalkyl, C₇-C₃₄-Alkaryl oder C₆-C₃₄-Aryl darstellen können,
beispielsweise
Diphenylcarbonat,
Butylphenyl-phenylcarbonat, Di-Butylphenylcarbonat,
Isobutylphenyl-phenylcarbonat, Di-Isobutylphenylcarbonat,
tert-Butylphenyl-phenylcarbonat, Di-tert-Butylphenylcarbonat,
n-Pentylphenyl-phenylcarbonat, Di-(n-Pentylphenyl)carbonat,
n-Hexylphenyl-phenylcarbonat, Di-(n-Hexylphenyl)carbonat,
Cyclohexylphenyl-phenylcarbonat, Di-Cyclohexylphenylcarbonat,
Phenylphenol-phenylcarbonat, Di-Phenylphenolcarbonat,
Isooctylphenyl-phenylcarbonat, Di-Isooctylphenylcarbonat,
n-Nonylphenyl-phenylcarbonat, Di-(n-Nonylphenyl)carbonat,
Cumylphenyl-phenylcarbonat, Di-Cumylphenylcarbonat,
Naphthylphenyl-phenylcarbonat, Di-Naphthylphenylcarbonat,
Di-tert-Butylphenyl-phenylcarbonat, Di-(Di-tert-Butylphenyl)carbonat,
Dicumylphenyl-phenylcarbonat, Di-(Dicumylphenyl)carbonat,
4-Phenoxyphenyl-phenylcarbonat, Di-(4-Phenoxyphenyl)carbonat,
3-Pentadecylphenyl-phenylcarbonat, Di-(3-Pentadecylphenyl)carbonat
Tritylphenyl-phenylcarbonat, Di-Tritylphenylcarbonat,
bevorzugt
Diphenylcarbonat,
tert-Butylphenyl-phenylcarbonat, Di-tert-Butylphenylcarbonat,
Phenylphenol-phenylcarbonat, Di-Phenylphenolcarbonat,
Cumylphenyl-phenylcarbonat, Di-Cumylphenylcarbonat, besonders bevorzugt Diphenylcarbonat.

Die Kohlensäurediester werden, bezogen auf Summe der aliphatischen Diole und der niedermolekularen aliphatischen Polycarbonate, im Verhältnis 1 zu 0,60 bis 1,00, bevorzugt 1 : 0,70 bis 1 : 0,98 eingesetzt, besonders bevorzugt 1 : 0,75 - 0,95. Es können auch Mischungen der oben genannten Kohlensäurediester eingesetzt werden.

Für die Synthese der hochmolekularen aliphatischen Polycarbonate in der zweiten Stufe des erfindungsgemäßen Verfahrens können als Katalysatoren prinzipiell alle für Umesterungsreaktionen bekannte, lösliche Katalysatoren (homogene Katalyse), sowie heterogene Umesterungskatalysatoren eingesetzt werden. Vorzugsweise wird der zweite Schritt des erfindungsgemäßen Verfahrens in Gegenwart von Katalysatoren durchgeführt.

Insbesondere eignen sich für das erfindungsgemäße Verfahren Hydroxide, Oxide, Metallalkoholate, Carbonate und metallorganische Verbindungen der Metalle der I., II., III., IV. und V. Hauptgruppe des Periodensystems der Elemente, der II., III. und IV. Nebengruppe sowie die Elemente aus der Gruppe der Seltenen Erden, insbesondere die Verbindungen des Ti, Zr, Pb, Sn, Zn, Bi, Ce und Sb.

Zum Beispiel seien genannt: LiOH, Li₂CO₃, K₂CO₃, KOH, NaOH, KOMe, NaOMe, MeOMgOAc, CaO, BaO, KOt-Bu, TiCl₄, Titan-tetraalkoholate oder -terephthalate, Zirconiumtetraalkoholate, Zinn-octanoate, Dibutylzinn-dilaureat, Dibutylzinnoxid, Dibutylzinn-methoxid, Bistributylzinnoxid, Zinnoxalate, Zinn-2-ethylhexanoat, Zink-2-ethylhexanoat, Zirconium-2-ethylhexanoat, Wismuth-2-ethylhexanoat, Cerium-2-ethylhexanoat, Bleistearate, Antimontrioxid, Zirconium-tetra-isopropylat etc. Weiterhin können anorganische oder organische Säuren wie z.B. Phosphorsäure, Essigsäure, p-Toluolsulfonsäure als Katalysatoren eingesetzt werden.

Weiterhin können im erfindungsgemäßen zweiten Schritt des Verfahrens tertiäre Amine mit R₁R₂R₃N mit R₁₋₃ als C₁ - C₃₀-Hydroxyalkyl, -aryl oder -alkyl eingesetzt werden, besonders Trimethylamin, Triethylamin, Tributylamin, N,N-Dimethylcyclohexylamin, N,N-Dimethylethanolamin, 1,8-Diazabicyclo-(5.4.0)undec-7-en, 1,4-Diazabicyclo(2.2.2)octan, 1,2-Bis(N,N-dimethylamino)-ethan, 1,3-Bis(N,N-dimethylamino)-propan und Pyridin.

Ebenso können im erfindungsgemäßen zweiten Schritt des Verfahrens Ammoniumoder Phosphoniumverbindungen eingesetzt werden.

Ammonium- oder Phosphoniumverbindungen im Sinne der Erfindung sind solche der Formeln (V) und (VI), 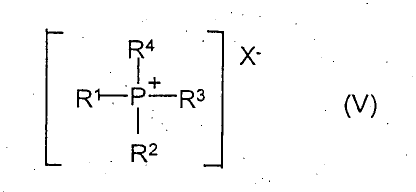 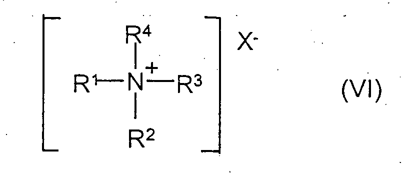 wobei R¹⁻⁴ dieselben oder verschiedene C₁-C₁₀-Alkyle, C₆-C₁₀-Aryle, C₇-C₁₀-Aralkyle oder C₅-C₆-Cycloalkyle sein können, bevorzugt Methyl oder C₆-C₁₄-Aryle, besonders bevorzugt Methyl oder Phenyl, und X⁻ ein Anion wie Hydroxid, Sulfat, Hydrogensulfat, Hydrogencarbonat, Carbonat, ein Halogenid, bevorzugt Chlorid, oder ein Alkoholat der Formel OR sein kann, wobei R C₆-C₁₄-Aryl oder C₇-C₁₂-Aralkyl, bevorzugt Phenyl, sein kann.

Bevorzugte Katalysatoren sind
Tetramethylammoniumhydroxid,
Tetramehtylammoniumacetat,
Tetramehtylammoniumfluorid,
Tetramehtylammoniumtetraphenylboranat,
Tetramehtylammoniumphenolat,
Dimethyldiphenylammoniumhydroxid,
Tetraehtylammoniumhydroxid,
Tetraphenylphosphoniumchlorid,
Tetraphenylphosphoniumhydroxid,
Tetraphenylphosphoniumphenolat, die Alkoholate und Oxide des Titans, Zinns oder Zirkoniums (z.B. Ti(OPr)₄, Dibutylzinnoxid), sowie Zinn-organische Verbindungen.

Besonders bevorzugt wird Dibutylzinnoxid eingesetzt.

Der Katalysator kann nach Abschluss der Reaktion im Produkt belassen, abgetrennt, neutralisiert oder maskiert werden. Vorzugsweise wird der Katalysator im Produkt belassen.

Die Katalysatoren werden bevorzugt in Mengen von 0,0001 bis 0,8 mol%, bezogen auf die Summe der aliphatischen Diole und der niedermolekularen aliphatischen Polycarbonate, besonders bevorzugt in Mengen von 0,01 bis 0,6 mol%, eingesetzt.

Das erfindungsgemäße Verfahren erlaubt die Herstellung von aliphatischen Polycarbonaten mit einer gewichtsgemittelten Molmasse Mw von mindestens 30 000 g mol⁻¹, aufgebaut aus der sich wiederholenden Einheit der Formel (VII) 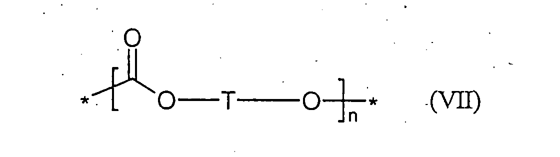 wobei n für eine Zahl zwischen 1 und 100, bevorzugt 1 bis 80 und besonders bevorzugt 1 bis 45 steht und
wobei T sowohl für einen verzweigten oder linearen, gesättigten, ungesättigten Alkyl- oder Cycloalkylrest aus 2 - 40 Kohlenstoffen, bevorzugt gesättigte, lineare Alkyldiole mit 3 - 15 Kohlenstoffen, besonders bevorzugt mit 3 - 10 Kohlenstoffen, ganz besonders bevorzugt mit 6-10 Kohlenstoffatomen, insbesondere 7-10 Kohlenstoffatomen steht, als auch für einen Rest (II)

Al-O-Ar-O-Al (II)

worin Al verzweigte oder linearen, gesättigte oder ungesättigte Alkyl- oder Cycloalkylreste aus 2-40 Kohlenstoffen und -O-Ar-O- für einen von einem Bisphenol, bevorzugt Bisphenol A, 1,1-Bis-(4-hydroxyphenyl)-3,3,5-trimethylcyclohexan (Bisphenol TMC) oder 1,3-Bis-[2-(4-hydroxyphenyl)-2-propyl]benzol (Bisphenol M), abgeleiteten aromatischen Rest aus 12-24 Kohlenstoffatomen steht.

T kann dabei auch innerhalb des Polymermoleküls variieren.

Die nach dem erfindungsgemäßen Verfahren erhältlichen Polycarbonate können durch den Einsatz geringer Mengen Verzweiger bewusst und kontrolliert verzweigt werden. Einige geeignete Verzweiger sind:
Phloroglucin,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-[4,4-bis-(4-hydroxyphenyl)-cyclohexyl]-propan,
2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-orthoterephthalsäureester,
Tetra-(4-hydroxyphenyl)-methan,
Tetra-(4-(4-hydroxyphenyl-isopropyl)-phenoxy)-methan,
Isatinbiskresol,
Pentaerythrit,
2,4-Dihydroxybenzoesäure,
Trimesinsäure,
Cyanursäure,
1,4-Bis-(4',4"-dihydroxytriphenyl)-methyl)-benzol und
α,α',α"-Tris-(4-hydroxyphenyl)-1,3,4-triisopropenylbenzol. Besonders bevorzugt sind 1,1,1-Tri-(4-hydroxyphenyl)-ethan und Isatinbiskresol.

Diese Verzweiger können in jeder beliebigen Stufe des Verfahrens zugegeben werden, also sowohl in der ersten Stufe bei der Herstellung der niedermolekularen aliphatischen Polycarbonate als auch in der zweiten Stufe in der Schmelzeumesterung bei der Herstellung der hochmolekularen aliphatischen Polycarbonate.

Die gegebenenfalls mitzuverwendenden 0,02 bis 3,6 mol %, bevorzugt 0,05 bis 2,5 mol%, bezogen auf die Summe der aliphatischen Diole und der niedermolekularen aliphatischen Polycarbonate, an Verzweigern, werden bevorzugt zusammen mit den aliphatischen Diolen und den niedermolekularen aliphatischen Polycarbonaten in der zweiten Stufe eingesetzt.

Die erfindungsgemäßen aliphatischen Polycarbonate können Kettenabbrecher enthalten. Die entsprechenden Kettenabbrecher sind unter anderem aus EP 335 214 A und DE 3 007 934 A bekannt. Exemplarisch aber nicht ausschließlich sind als geeignete Kettenabbrecher sowohl Monophenole als auch Monocarbonsäuren genannt. Geeignete Monophenole sind Phenol, Alkylphenole wie Kresole, p-tert-Butylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol, bzw. deren Mischungen.

Bevorzugt sind p-tert-Butylphenol oder Phenol, besonders bevorzugt Phenol.

Geeignete Monocarbonsäuren sind Benzoesäure, Alkylbenzoesäuren und Halogenbenzoesäuren.

Nach dem zweiten Schritt des erfindungsgemäßen Verfahrens besteht die Möglichkeit, die Kettenabbrecher zu jedem Zeitpunkt der Reaktion zuzugeben, bevorzugt zu Beginn der Reaktion, und die Zugabe kann in mehrere Portionen aufgeteilt werden. Der Anteil an Kettenabbrecher kann 0,4 - 17 mol%, bevorzugt 1,3 - 8,6 mol% (bezogen auf die Summe der aliphatischen Diole und der niedermolekularen aliphatischen Polycarbonate) betragen.

Der zweite Schritt des erfindungsgemäßen Verfahrens kann kontinuierlich oder batchweise ausgeführt werden.

Der zweite Schritt des erfindungsgemäßen Verfahrens braucht apparatetechnisch nicht mit dem ersten Schritt des erfindungsgemäßen Verfahrens physikalisch verbunden zu sein, solange die niedermolekularen Polycarbonate, die nach dem ersten Schritt des erfindungsgemäßen Verfahrens erhältlich sind, für die Herstellung der hochmolekularen aliphatischen Polycarbonate eingesetzt werden.

Der zweite Schritt des erfindungsgemäßen Verfahrens wird allgemein bei Temperaturen von 150 bis 320°C, bevorzugt von 160 bis 280°C und besonders bevorzugt von 180°C und 220°C und Drücken von 1 bar bis 0,001 (Hochvakuum) bar ausgeführt.

Gemäß dem erfindungsgemäßen Verfahren erfolgt in dem zweiten Schritt die Durchführung beispielsweise derart, dass eine Mischung aus niedermolekularem aliphatischen Polycarbonat und gegebenenfalls aliphatischem Diol und Diarylcarbonat in Inertgasatmosphäre unter Anwesenheit eines Katalysators bei Temperaturen von 75°C bis 225°C, vorzugsweise von 105°C bis 235°C, besonders bevorzugt von 120°C bis 190°C, unter normalem Druck in 0,1 bis 5 Stunden aufgeschmolzen wird. Dann wird durch Reduktion des Druckes und Erhöhung der Temperatur auf 150 - 320°C, bevorzugt 160 - 280°C, besonders bevorzugt 180 - 220°C aufkondensiert, und dabei die entstehende Hydroxyarylkomponente abdestilliert. Der Druck wird so gewählt, dass die Hydroxyarylkomponente problemlos abdestilliert werden kann.

Die erhaltenen Polycarbonate haben mittlere Gewichtsmolekulargewichte von Mw 20 000 bis 500 000 g mol⁻¹, bevorzugt 25 000 bis 300 000, besonders bevorzugt 30 000 bis 200 000.

Zur Änderung der Eigenschaften können den erfindungsgemäßen aliphatischen Polycarbonaten Hilfs- und Verstärkungsstoffe zugemischt werden. Als solche sind u.a. in Betracht zu ziehen: Thermo- und UV-Stabilisatoren, Fließhilfsmittel, Entformungsmittel, Flammschutzmittel, Pigmente, fein zerteilte Mineralien, Faserstoffe, z.B. Alkyl- und Arylphosphite, -phosphate, -phosphane, niedermolekulare Carbonsäureester, Halogenverbindungen, Salze, Kreide, Quarzmehl, Glas- und Kohlenstofffasern, Pigmente und deren Kombination. Solche Verbindungen werden z.B. in WO 99/55772, S. 15 - 25, und in "Plastics Additives", R. Gächter und H. Müller, Hanser Publishers 1983, beschrieben.

Die nach dem erfindungsgemäßen Verfahren erhältlichen aliphatischen Polycarbonate können auf üblichen Maschinen, beispielsweise auf Extrudern oder Spritzgussmaschinen, zu beliebigen Formkörpern, beispielsweise zu Folien oder Platten, in üblicher Weise verarbeitet werden.

Ein weiterer Gegenstand der vorliegenden Erfindung ist daneben die Verwendung der erfindungsgemäßen aliphatischen Polycarbonate bzw. der entsprechenden Formmassen zur Herstellung von Formkörpern und Extrudaten, insbesondere optischen Artikeln, Folien und Platten, bzw. die entsprechenden Formkörper, vorzugsweise optischen Artikel, hergestellt aus den erfindungsgemäßen aliphatischen Polycarbonaten.

Beispiele für diese Verwendung sind, ohne sie beschränken zu wollen: Sicherheitsscheiben, Extrusions- und Lösungsfolien für Displays oder Elektromotoren, Herstellung von lichtdurchlässigen Platten, zur Herstellung von Ampelgehäusen oder Verkehrsschildern, zur Herstellung von Präzisionsspritzgussteilen, optische Anwendungen wie optische Speicher (CD, DVD, MD), zur Herstellung von Leuchten, für Sportartikel, für Anwendungen im Automobilbereich, für Haushaltsartikel und Elektround Elektronikgeräten oder für sonstige Anwendungen, beispielsweise:
1. Sicherheitsscheiben, die bekanntlich in vielen Bereichen von Gebäuden, Fahrzeugen und Flugzeugen erforderlich sind, sowie als Schilde von Helmen.
2. Herstellung von Folien, insbesondere Skifolien.
3. Herstellung von Blaskörpern (siehe beispielsweise US-Patent 2 964 794), beispielsweise 1 bis 5 Gallon Wasserflaschen.
4. Herstellung von lichtdurchlässigen Platten, insbesondere von Hohlkammerplatten, beispielsweise zum Abdecken von Gebäuden wie Bahnhöfen, Gewächshäusern und Beleuchtungsanlagen.
5. Herstellung optischer Datenspeicher.
6. Zur Herstellung von Ampelgehäusen oder Verkehrsschildern.
7. Zur Herstellung von Schaumstoffen (siehe beispielsweise DE-B 1 031 507).
8. Zur Herstellung von Fäden und Drähten (siehe beispielsweise DE-B 1 137 167 und DE-A 1 785 137).
9. Als transluzente Kunststoffe mit einem Gehalt an Glasfasern für lichttechnische Zwecke (siehe beispielsweise DE-A 1 554 020).
10. Als transluzente Kunststoffe mit einem Gehalt an Bariumsulfat, Titandioxid und oder Zirkoniumoxid bzw. organischen polymeren Acrylatkautschuken (EP-A 634 445, EP-A 269324) zur Herstellung von lichtdurchlässigen und lichtstreunenden Formteilen.
11. Zur Herstellung von Präzisionsspritzgussteilchen, wie beispielsweise Linsenhalterungen. Hierzu verwendet man Polycarbonate mit einem Gehalt an Glasfasern, die gegebenenfalls zusätzlich etwa 1 - 10 Gew.-% MoS₂, bezogen auf Gesamtgewicht, enthalten.
12. Zur Herstellung optischer Geräteteile, insbesondere Linsen für Foto- und Filmkameras (siehe beispielsweise DE-A 2 701 173).
13. Als Lichtübertragungsträger, insbesondere als Lichtleiterkabel (siehe beispielsweise EP-A1 0 089 801).
14. Als Elektroisolierstoffe für elektrische Leiter und für Steckergehäuse sowie Steckverbinder.
15. Herstellung von Mobiltelefongehäusen mit verbesserter Beständigkeit gegenüber Parfüm, Rasierwasser und Hautschweiß.
16. Network interface devices.
17. Als Trägermaterial für organische Fotoleiter.
18. Zur Herstellung von Leuchten, z.B. Scheinwerferlampen, als sogenannte "headlamps", Streulichtscheiben oder innere Linsen.
19. Für medizinische Anwendungen, z.B. Oxygenatoren, Dialysatoren.
20. Für Lebensmittelanwendungen, wie z.B. Flaschen, Geschirr und Schokoladenformen.
21. Für Anwendungen im Automobilbereich, wo Kontakt zu Kraftstoffen und Schmiermitteln auftreten kann, wie beispielsweise Stoßfänger ggf. in Form geeigneter Blends mit ABS oder geeigneten Kautschuken.
22. Für Sportartikel, wie z.B. Slalomstangen oder Skischuhschnallen.
23. Für Haushaltsartikel, wie z.B. Küchenspülen und Briefkastengehäuse.
24. Für Gehäuse, wie z.B. Elektroverteilerschränke.
25. Gehäuse für Elektrozahnbürsten und Föngehäuse
26. Transparente Waschmaschinen - Bullaugen mit verbesserter Beständigkeit gegenüber der Waschlösung.
27. Schutzbrillen, optische Korrekturbrillen.
28. Lampenabdeckungen für Kücheneinrichtungen mit verbesserter Beständigkeit gegenüber Küchendunst insbesondere Öldämpfen.
29. Verpackungsfolien für Arzneimittel.
30. Chip-Boxen und Chip-Träger
31. Für sonstige Anwendungen, wie z.B. Stallmasttüren oder Tierkäfige.

### Beispiele

Die folgenden Beispiele sollen die vorliegende Erfindung veranschaulichen aber in keiner Weise limitieren.

Die relative Lösungsviskosität wurde in Dichlormethan bei einer Konzentration von 5 g/l bei 25°C bestimmt.

Alle Angaben bezüglich der Hydroxylzahlen (OHZ) beziehen sich auf mg KOH/g Substanz. Sie wurden nach DIN EN ISO 4629 gemessen.

Das Mw wird von einer Lösung von 5 g Polymer auf ein Liter Methylenchlorid über eine GPC Messung mit angeschlossener Streulichtdetektion bestimmt.

### Vergleichsbeispiel 1

Ziel ist die Herstellung eines hochmolekularen aliphatischen 1,6-Hexandiol-Polycarbonats nach DE 1 031 512.

80,00 g (0,67 mol) 1,6-Hexandiol, 84,00 g (0,71 mol) Diethylcarbonat und 0,03 g 21%iges Natriumethylat werden in einen Rührbehälter mit Destillationsaufsatz eingewogen. Der Behälter wird durch Anlegen von Vakuum und Spülen mit Stickstoff (dreimal) vom Luftsauerstoff befreit und das Gemisch bei 100 - 130°C 30 Minuten unter Stickstoff erhitzt und gerührt. Das entstehende Ethanol wird abdestilliert. Dann erhöht man die Temperatur auf 200°C und legt ein Vakuum von 40 mbar an. Nach drei Stunden werden 0,20 g Chlorameisensäurephenylester zugegeben und weitere drei Stunden bei 250°C im Hochvakuum gerührt. Nach Beendigung der Reaktion erhält man ein weißes, intransparentes Polycarbonat mit einer OH-Zahl von 2 und einem mittleren Molekulargewicht von 25420 g mol⁻¹ (relative Lösungsviskosität 1,30).

Die Synthese eines entsprechenden zähelastischen Polycarbonats mit einer höheren relativen Viskosität ist auf diesem Wege nicht möglich.

### Vergleichsbeispiel 2

Ziel ist die Herstellung eines hochmolekularen aliphatischen 1,6-Hexandiol-Perhydro-Bisphenol A-Polycarbonats nach DE 1 031 512.

59,60 g (0,50 mol) 1,6-Hexandiol, 23,1 g (0,10 mol) Perhydro-Bisphenol A, 84,85 g (0,71 mol) Diethylcarbonat und 0,03 g 21%iges Natriumethylat werden in einen Rührbehälter mit Destillationsaufsatz eingewogen. Der Behälter wird durch Anlegen von Vakuum und Spülen mit Stickstoff (dreimal) vom Luftsauerstoff befreit und das Gemisch bei 100 - 130°C 30 Minuten unter Stickstoff erhitzt und gerührt. Das entstehende Ethanol wird abdestilliert. Dann erhöht man die Temperatur auf 200°C und legt ein Vakuum von 40 mbar an. Nach drei Stunden werden 0,20 g Chlorameisensäurephenylester zugegeben und weitere drei Stunden im Hochvakuum bei 250°C gerührt. Nach Beendigung der Reaktion erhält man ein transparentes, Produkt mit einer OH-Zahl kleiner 13 und einem mittleren Molekulargewicht von 6532 g mol⁻¹ (relative Lösungsviskosität 1,12).

Die Synthese eines entsprechenden zähelastischen Polycarbonats mit einer höheren relativen Viskosität und damit Molmasse ist auf diesem Wege nicht möglich.

### Beispiel 1

Ziel ist die Herstellung eines hochmolekularen aliphatischen 1,6-Hexandiol-Polycarbonats.

94,14 g (0,8 mol) 1,6-Hexandiol, 158,04 g (0,74 mol) Diphenylcarbonat und 0,64 g Bis(tributylzinn)oxid werden in einen Rührbehälter mit Destillationsaufsatz eingewogen. Der Behälter wird durch Anlegen von Vakuum und Spülen mit Stickstoff (dreimal) vom Luftsauerstoff befreit und das Gemisch bei 180 - 185°C eine Stunde unter Stickstoff erhitzt und gerührt. Bei 181°C setzt ungefähr die Phenoldestillation ein. Man erhöht die Temperatur schrittweise so auf 210°C, dass das Phenol ständig ohne Probleme abdestilliert werden kann. Sobald die Reaktionstemperatur fällt legt man Vakuum an, welches man langsam auf 0,01 mbar steigert, so dass auch letzte Reste von Phenol aus dem Ansatz entfernt werden. Die Gesamtreaktionsdauer betrug 16 Stunden. Der Ansatz wurde auf 80°C abgekühlt und erst dann belüftet. Die OH-Zahl wurde zu 56 mg KOH/g bestimmt.

186,30 g zuvor produziertes Hexandiolpolycarbonat (OHZ = 56, 0,1 mol), 22,92 g (0,107 mol) Diphenylcarbonat und 0,203 g (8,0 · 10⁻⁴ mol) Dibutylzinnoxid werden in einen Rührbehälter mit Destillationsaufsatz eingewogen. Der Behälter wird durch Anlegen von Vakuum und Spülen mit Stickstoff (dreimal) vom Luftsauerstoff befreit und das Gemisch bei 150°C aufgeschmolzen. Die Temperatur wird auf 190°C erhöht und über 60 Minuten gerührt. Dann wird die Temperatur auf 160°C erniedrigt und anschließend innerhalb von 30 Minuten der Druck auf 100 mbar vermindert. Das entstehende Phenol wird über 60 Minuten abdestilliert. Danach wird innerhalb von 90 Minuten das Vakuum schrittweise auf 50 mbar verbessert, ohne dass die Kopftemperatur ansteigt. Innerhalb von 90 Minuten wird der Druck ohne Anstieg der Kopftemperatur auf 10 mbar verringert, und man destilliert weitere 90 Minuten bei 190°C ab. Zuletzt wird 20 Minuten bei 190°C im Hochvakuum abdestilliert. Man erhält ein weißes, zähelastisches Produkt mit einem mittleren Molekulargewicht von 50 600 g mol⁻¹ und einer OH-Zahl kleiner 1 (relative Lösungsviskosität 1,540).

### Beispiel 2

Ziel ist die Herstellung eines hochmolekularen aliphatischen 1,6-Hexandiol-Dianol-220®-Polycarbonats.

94,14 g (0,8 mol) 1,6-Hexandiol, 158,04 g (0,74 mol) Diphenylcarbonat und 0,64 g Bis(tributylzinn)oxid werden in einen Rührbehälter mit Destillationsaufsatz eingewogen. Der Behälter wird durch Anlegen von Vakuum und Spülen mit Stickstoff (dreimal) vom Luftsauerstoff befreit und das Gemisch bei 180 - 185°C eine Stunde unter Stickstoff erhitzt und gerührt. Bei 181°C setzt ungefähr die Phenoldestillation ein. Man erhöht die Temperatur schrittweise so auf 210°C, dass das Phenol ständig ohne Probleme abdestilliert werden kann. Sobald die Reaktionstemperatur fällt legt man Vakuum an, welches man langsam auf 0,01 mbar steigert, so dass auch letzte Reste von Phenol aus dem Ansatz entfernt werden. Die Gesamtreaktionsdauer betrug 16 Stunden. Der Ansatz wurde auf 80°C abgekühlt und erst dann belüftet. Die OH-Zahl wurde zu 56 mg KOH/g bestimmt.

17,63 g zuvor produziertes Hexandiolpolycarbonat (OHZ = 56, 0,0096 mol), 13,75 g (0,0642 mol) Diphenylcarbonat, 17,54 g (0,0504 mol) Dianol 220® und 0,0122 g (4,8 · 10⁻⁵ mol) Dibutylzinnoxid werden in einen Rührbehälter mit Destillationsaufsatz eingewogen. Der Behälter wird durch Anlegen von Vakuum und Spülen mit Stickstoff (dreimal) vom Luftsauerstoff befreit und das Gemisch bei 150°C aufgeschmolzen. Die Temperatur wird auf 190°C erhöht und über 60 Minuten gerührt. Dann wird die Temperatur auf 160°C erniedrigt und anschließend innerhalb von 30 Minuten der Druck auf 100 mbar vermindert. Das entstehende Phenol wird über 60 Minuten abdestilliert. Danach wird innerhalb von 90 Minuten das Vakuum schrittweise auf 50 mbar verbessert, ohne dass die Kopftemperatur ansteigt. Innerhalb von 90 Minuten wird der Druck ohne Anstieg der Kopftemperatur auf 10 mbar verringert, und man destilliert weitere 90 Minuten bei 190°C ab. Zuletzt wird 20 Minuten bei 190°C im Hochvakuum abdestilliert. Man erhält ein transparentes, zähelastisches Produkt mit einem mittleren Molekulargewicht von 55 200 g mol⁻¹ und einer OH-Zahl kleiner 2 (relative Lösungsviskosität 1,514).

### Beispiel 3

Ziel ist die Herstellung eines hochmolekularen aliphatischen 1,6-Hexandiol-Perhydro Bisphenol A-Polycarbonats. 94,14 g (0,8 mol) 1,6-Hexandiol, 158,04 g (0,74 mol) Diphenylcarbonat und 0,64 g Bis(tributylzinn)oxid werden in einen Rührbehälter mit Destillationsaufsatz eingewogen. Der Behälter wird durch Anlegen von Vakuum und Spülen mit Stickstoff (dreimal) vom Luftsauerstoff befreit und das Gemisch bei 180 - 185°C eine Stunde unter Stickstoff erhitzt und gerührt. Bei 181°C setzt ungefähr die Phenoldestillation ein. Man erhöht die Temperatur schrittweise so auf 210°C, dass das Phenol ständig ohne Probleme abdestilliert werden kann. Sobald die Reaktionstemperatur fällt legt man Vakuum an, welches man langsam auf 0,01 mbar steigert, so dass auch letzte Reste von Phenol aus dem Ansatz entfernt werden. Die Gesamtreaktionsdauer betrug 16 Stunden. Der Ansatz wurde auf 80°C abgekühlt und erst dann belüftet. Die OH-Zahl wurde zu 56 mg KOH/g bestimmt.

51,41 g zuvor produziertes Hexandiolpolycarbonat (OHZ = 56, 0,028 mol), 22,92 g (0,107 mol) Diphenylcarbonat, 17,31 g (0,072 mol) Perhydro-BisphenolA und 0,0203 g (8,0 · 10⁻⁵ mol) Dibutylzinnoxid werden in einen Rührbehälter mit Destillationsaufsatz eingewogen. Der Behälter wird durch Anlegen von Vakuum und Spülen mit Stickstoff (dreimal) vom Luftsauerstoff befreit und das Gemisch bei 150°C aufgeschmolzen. Die Temperatur wird auf 190°C erhöht und über 60 Minuten gerührt. Dann wird die Temperatur auf 160°C erniedrigt und anschließend innerhalb von 30 Minuten der Druck auf 100 mbar vermindert. Das entstehende Phenol wird über 60 Minuten abdestilliert. Danach wird innerhalb von 90 Minuten das Vakuum schrittweise auf 50 mbar verbessert, ohne dass die Kopftemperatur ansteigt. Innerhalb von 90 Minuten wird der Druck ohne Anstieg der Kopftemperatur auf 10 mbar verringert, und man destilliert weitere 90 Minuten bei 190°C ab. Zuletzt wird 20 Minuten bei 190°C im Hochvakuum abdestilliert. Man erhält ein transparentes, zähelastisches Produkt mit einem mittleren Molekulargewicht von 46600 g mol⁻¹ und einer OH-Zahl kleiner 2 (relative Lösungsviskosität 1,481).

## Patentansprüche

1. Verfahren zur Herstellung von aliphatischen Polycarbonaten mit aliphatischen Polycarbonatblöcken, **dadurch gekennzeichnet, dass** in einer ersten Stufe die Herstellung von niedermolekularen aliphatischen Polycarbonaten erfolgt und diese anschließend in einer zweiten Stufe nach dem Schmelzeumesterungsverfahren zu hochmolekularen aliphatischen Polycarbonaten aufkondensiert werden.

2. Verfahren gemäß Anspruch 1, dass die zweiten Stufe in Gegenwart von Katalysatoren durchgeführt wird.

3. Verfahren gemäß Anspruch 3, dass in Gegenwart von Dibutylzinnoxid durchgeführt wird.

4. Verfahren gemäß Anspruch 1, dass in der zweiten Stufe gegebenenfalls in Gegenwart von aliphatischen Diolen durchgeführt wird.

5. Ein aliphatisches Polycarbonat mit einer gewichtsgemittelten mittleren Molmasse Mw von mindestens 30 000 g mol⁻¹, aufgebaut aus der sich wiederholenden Einheit der Formel (VII) 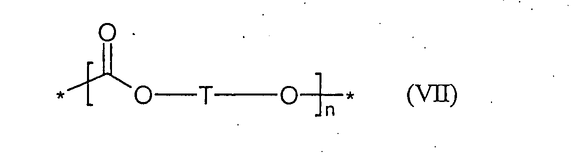 wobei n für eine Zahl zwischen 1 und 100, bevorzugt 1 bis 80 und besonders bevorzugt 1 bis 45 steht und wobei T jeweils unabhängig voneinander sowohl für einen verzweigten oder linearen, gesättigten, ungesättigten Alkyl- oder Cycloalkylrest aus 2 - 40 Kohlenstoffen steht als auch für einen Rest (II)
Al-O-Ar-O-Al (II)
worin Al verzweigte oder linearen, gesättigte oder ungesättigte Alkyl- oder Cycloalkylreste aus 2-40 Kohlenstoffen und -O-Ar-O- für einen von einem Bisphenol abgeleiteten aromatischen Rest aus 12-24 Kohlenstoffatomen steht.

6. Verwendung des aliphatischen Polycarbonats gemäß Anspruch 2 zur Herstellung von Formkörpern, Folien und Extrudaten.

7. Formkörper, Folien und Extrudate aus aliphatischen Polycarbonaten gemäß Anspruch 2.
